# EUROPEAN PATENT APPLICATION

(11) **EP 3 748 980 A1**
(43) Date of publication of application: **09.12.2020**
(21) Application number: 19213643.0
(22) Date of filing: 04.12.2019
(51) Int. Cl.: H04N 21/442, H04N 21/466, G06F 21/32, G06K 9/00, H04N 21/4415, H04N 21/44

(54) **INTERACTIVE METHOD AND APPARATUS BASED ON USER ACTION INFORMATION, AND ELECTRONIC DEVICE**

(30) Priority: 06.06.2019 CN 201910491719
(71) Applicant: SHENZHEN GOODIX TECHNOLOGY CO., LTD., Shenzhen, Guangdong 518045 (CN)
(72) Inventor: LI, Yunning, Shenzhen, 518045 (CN); SHEN, Jian, Shenzhen, 518045 (CN)
(74) Representative: Pfenning, Meinig & Partner mbB

(57) **Abstract**

The present application provides an interactive method and apparatus based on user action information, and an electronic device. The method includes: judging whether a collected first image includes face information of N users authenticated by a terminal, where N is an integer greater than or equal to 2; recognizing action information of the N users in the first image, if the first image includes the face information of the N users authenticated by the terminal; determining, according to preset action information and the action information of the N users, a target user in the N users, where action information of the target user in the first image is the same as the preset action information; and displaying content bound with the target user according to the action information of the target user in the first image. In the present application, the target user is accurately recognized according to the action information of the users authenticated by the terminal, thereby enabling the terminal to make a correct interactive response.

## Description

### TECHNICAL FIELD

The present disclosure relates to the field of terminal technologies, and in particular relates to an interactive method and apparatus based on user action information, and an electronic device.

### BACKGROUND

Face recognition technology is a technology which collects an image of a user face, extracts a feature of the image, and then compares with a preset face feature to complete identity authentication. Because of the high uniqueness of face and the convenience of collection, face recognition technology is widely used in the fields of access control, attendance, finance and consumer electronics.

When a terminal recognizes face information of an authenticated user of the terminal, an action bound with the user can be executed. But a single terminal may correspond to multiple authenticated users, and when the terminal recognizes the face information of multiple authenticated users, the terminal cannot determine the action to be executed, causing the terminal to make an incorrect response.

### SUMMARY

The present application provides an interactive method and apparatus based on user action information, and an electronic device, to accurately recognize a target user according to action information of users authenticated by a terminal, thereby enabling the terminal to make a correct interactive response.

A first aspect of the present application provides an interactive method based on user action information, including:
judging whether a collected first image includes face information of N users authenticated by a terminal, where N is an integer greater than or equal to 2;
recognizing action information of the N users in the first image, if the first image includes the face information of the N users authenticated by the terminal;
determining, according to preset action information and the action information of the N users, a target user in the N users, where action information of the target user in the first image is the same as the preset action information; and
displaying content bound with the target user according to the action information of the target user in the first image.

In an embodiment, determining the target user in the N users, includes:
if, in the action information of the N users, there is action information of M users which is the same as corresponding preset action information, continuing to collect a second image, where M is an integer greater than or equal to 2, and the M is less than or equal to the N; and
determining the target user according to the action information of the M users in the second image.

In an embodiment, before continuing to collect the second image, the method further includes:
displaying reminder information, where the reminder information is used for reminding the M users to change an action.

In an embodiment, determining the target user in the N users, including:
if, in the action information of the N user, there is action information of a single user which is the same as corresponding preset action information, determining the single user to be the target user.

In an embodiment, after displaying the content bound with the target user, the method further includes:
collecting a third image;
if the third image includes face information of at least one user authenticated by the terminal, determining a new target user according to action information of the at least one user in the third image;
judging whether the new target user is the same as the target user;
if not, displaying the content bound with the new target user.

In an embodiment, before judging whether the collected first image includes the face information of the N users authenticated by the terminal, the method further includes:
receiving a wake-up instruction input by a user to wake the terminal from a sleep state to a wake-up state; and
collecting the first image.

In an embodiment, the action information includes: a face action and/or a limb action.

In an embodiment, the terminal is an audio-visual device, and the content bound with the target user is a channel or a program in the audio-visual device.

A second aspect of the present application provides an interactive apparatus based on user action information, including:
a processing module, configured to judge whether a collected first image includes face information of N users authenticated by a terminal, where N is an integer greater than or equal to 2; recognize action information of the N users in the first image, if the first image includes the face information of the N users authenticated by the terminal; and determine a target user in the N users according to preset action information and the action information of the N users, where action information of the target user in the first image is the same as the preset action information;
a displaying module, configured to display content bound with the target user according to the action information of the target user in the first image.

In an embodiment, the interactive apparatus further includes: a collecting module;
the collecting module is configured to: if, in the action information of the N users, there is action information of M users which is the same as corresponding preset action information, continue to collect a second image, where M is an integer greater than or equal to 2, and M is less than or equal to N.

In an embodiment, the processing module is specifically configured to determine the target user according to the action information of the M users in the second image.

In an embodiment, the displaying module is further configured to display reminder information, where the reminder information is used for reminding the M users to change an action.

In an embodiment, the processing module is specifically configured to: if, in the action information of the N user, there is action information of a single user which is the same as corresponding preset action information, determine the single user to be the target user.

In an embodiment, the collecting module is further configured to collect a third image.

Correspondingly, the processing module is further configured to: if the third image includes face information of at least one user authenticated by the terminal, determine a new target according to action information of the at least one user in the third image; judge whether the new target user is the same as the target user.

The displaying module is configured to display content bound with the new target user when the new target user is different from the target user.

In an embodiment, the interactive apparatus further includes: a transceiving module;
the transceiving module is configured to receive a wake-up instruction to wake the terminal from a sleep state to a wake-up state.

Correspondingly, the collecting module is further configured to collect the first image.

In an embodiment, the action information includes: a face action and/or a limb action.

In an embodiment, the interactive apparatus is an audio-visual device, and the content bound with the target user is a channel or a program in the audio-visual device.

A third aspect of the present application provides an electronic device, including: at least one processor and a memory;
the memory stores computer executable instructions;
the at least one processor executes the computer executable instructions stored by the memory to cause the electronic device to perform the interactive method based on user action information described above.

A fourth aspect of the present application provides a computer readable storage medium on which computer executable instructions are stored, and when the computer executable instructions are executed by a processor, the interactive method based on user action information described above is implemented.

The present application provides an interactive method and an apparatus based on user action information, and an electronic device. The method includes: judging whether a collected first image includes face information of N users authenticated by a terminal, where N is an integer greater than or equal to 2; recognizing action information of the N users in the first image, if the first image includes the face information of the N users authenticated by the terminal; determining, according to preset action information and the action information of the N users, a target user in the N users, where action information of the target user in the first image is the same as the preset action information; and displaying content bound with the target user according to the action information of the target user in the first image. In the present application, the target user is accurately recognized according to the action information of the users authenticated by the terminal, thereby enabling the terminal to make a correct interactive response.

### BRIEF DESCRIPTION OF THE DRAWINGS

FIG. 1 is a schematic diagram of a scenario applicable to an interactive method based on user action information provided by the present application;
FIG. 2 is a first schematic flowchart of an interactive method based on user action information provided by the present application;
FIG. 3 is a schematic diagram of an action provided by the present application;
FIG. 4 is a first schematic diagram of a recognition result provided by the present application;
FIG. 5 is a second schematic diagram of the recognition result provided by the present application;
FIG. 6 is a third schematic diagram of the recognition result provided by the present application;
FIG. 7 is a second schematic flowchart of an interactive method based on user action information provided by the present application;
FIG. 8 is a schematic diagram of a terminal interface provided by the present application;
FIG. 9 is a first schematic structural diagram of an interactive apparatus based on user action information provided by the present application;
FIG. 10 is a second schematic structural diagram of an interactive apparatus based on user action information provided by the present application;
FIG. 11 is a schematic structural diagram of an electronic device provided by the present application.

### DETAILED DESCRIPTION OF THE EMBODIMENTS

To make the purposes, technical solutions and advantages more clearly, the technical solutions in the embodiments of the present application are clearly and completely described in the following with reference to the embodiments of the present application. Obviously, the described embodiments are part of the embodiments of the application, rather than all the embodiments. Based on the embodiments of the present application, all other embodiments obtained by those skilled in the art without creative efforts are within the protection scope of the present application.

In order to solve the problem in the prior art that when a terminal recognizes face information of multiple authenticated users the terminal cannot make a correct interactive response, the present application provides an interactive method based on user action information, which determines a target user according to action information of multiple users authenticated by a terminal, thereby achieving the purpose of making a correct interactive response according to action information of the target user.

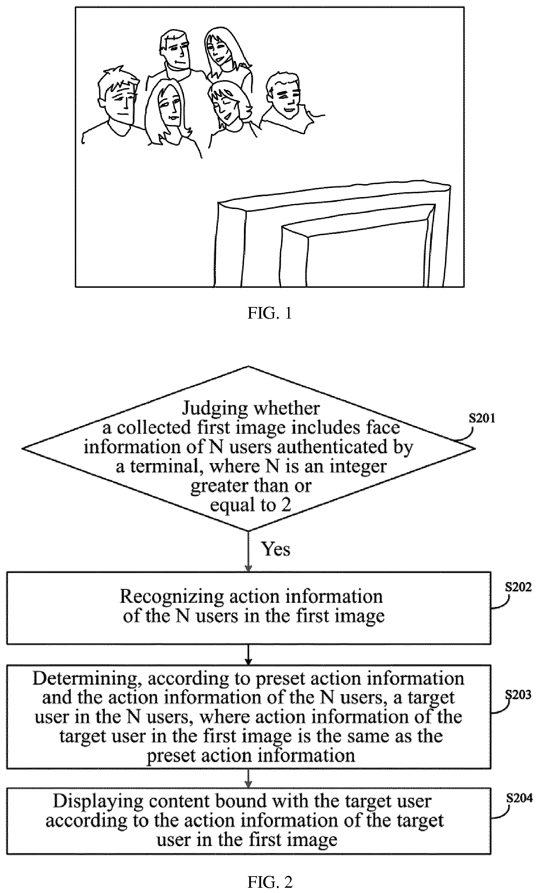

FIG. 1 is a schematic diagram of a scenario applicable to an interactive method based on user action information provided by the present application. As shown in FIG. 1, a terminal is included in the scenario in which the interactive method based on user action information provided by the present application is used. The terminal may be an electronic device integrated with an image collecting module.

The terminal in the present application includes, but is not limited to, a mobile terminal or a fixed terminal. The mobile terminal includes, but is not limited to, a mobile phone, a personal digital assistant (PDA), a tablet, a portable device (e.g., a portable computer, a pocket computer, or a handheld computer) and the like. The fixed terminal includes, but is not limited to, a desktop computer, an audio-visual device, a smart television, and the like. It should be understood that in FIG. 1 the terminal being a smart TV is taken as an example for illustration.

Illustratively, the terminal in the present application may be a smart TV integrated with an image collecting module, and the smart TV may correspond to multiple authenticated users, where, the authenticated users may be registered users of the smart TV. When the smart TV recognizes face information of multiple authenticated users, a target user may be further determined according to action information of the authenticated users, and then content bound with the target user may be played, and the content may be a TV show, a variety show, or the like.

Illustratively, the terminal in the present application may be a reading device integrated with an image collecting module, and the reading device also includes multiple authenticated users. When the reading device recognizes the face information of multiple authenticated users, a target user may be further determined according to the action information of the authenticated users, and then content bound with the target user may be displayed, and the content may be a book catalogue or may be a chapter read by the target user last time.

The interactive method based on user action information provided in the present application may also be applied to an application of a terminal, and the application also corresponds to multiple authenticated users. When the terminal runs the application and can recognize face information of multiple authenticated users, a target user may be further determined according to action information of the authenticated users, and then content bound with the target user may be displayed, and the content may be login content of the target user's account in the application.

It should be understood that the interactive method based on user action information provided in the present application is also applicable to other scenarios in which a terminal correspond to multiple authenticated users. The terminal in the present application corresponds to multiple authenticated users, where, according to different application scenarios, an authenticated user may be an authenticated user of the terminal or an authenticated user of an application in the terminal, and both of them may be collectively referred to as an authenticated user of the terminal.

FIG. 2 is a first schematic flowchart of an interactive method based on user action information provided by the present application. The execution body of the method flow shown in FIG. 2 may be an interactive apparatus based on user action information (illustrated by taking a terminal as an example in the following embodiments), and the interactive apparatus based on user action information may be implemented by any software and/or hardware. As shown in FIG. 2, the interactive method based on user action information provided by the present embodiment may include:
S201, judging whether a collected first image includes face information of N users authenticated by a terminal, where N is an integer greater than or equal to 2.

The terminal in this embodiment has a function of collecting images. In an embodiment, when the terminal is a smart phone, the first image collected by the terminal may be collected when the smart phone is in a wake-up state, or may be collected when the smart phone is in a wake-up state but is not unlocked, that is, collected in a locked state. In an embodiment, when the terminal is a smart TV, the first image collected by the terminal may be collected when the smart TV is in a wake-up state (e.g., the smart TV is in an open state). In the present embodiment, for different types of terminals, the state of the terminal when the first image is collected is not limited.

In the terminal of the present embodiment, the face information of X users authenticated by the terminal is stored, and it should be understood that X may be an integer greater than or equal to N. After the first image is obtained by the terminal, the face information of the users in the first image may be obtained, and then the face information of the users in the first image and the face information of the X users authenticated by the terminal are compared and matched to determine whether the face information of the users authenticated by the terminal is included in the first image.

In an embodiment, in the present embodiment, the face information of the users authenticated by the terminal stored in the terminal may be a face feature of the users, where the face feature of the users may include features of users' eyes, nose, mouth, or the like. After obtaining the first image, the terminal may extract a face feature of each user included in the first image, and then match the face feature of each user included in the first image with a face feature of each user authenticated by the terminal. If the face feature of the user that binds to the terminal is successfully matched, it is determined that there is a user bound with the terminal in the users included in the first image. In the present embodiment, the method of whether there is a user bound with the terminal in the first image may also refer to other methods for face recognition and matching, and are not repeated herein.

The above manner of face information matching can be used to judge whether the first image collected by the terminal includes face information of N users authenticated by the terminal, where N is an integer greater than or equal to 2. That is to say, it is judged whether the first image collected by the terminal includes the face information of at least two users authenticated by the terminal.

S202, recognizing action information of the N users in the first image, if the first image includes the face information of the N users authenticated by the terminal.

In the present embodiment, if the collected first image includes the face information of the N users authenticated by the terminal, the terminal may recognize the action information of the N users in the first image, where the action information of the users in this embodiment may be the action of the users. The terminal recognizes the action information of the N users in the first image, that is, the terminal recognizes the actions of the N users in the first image.

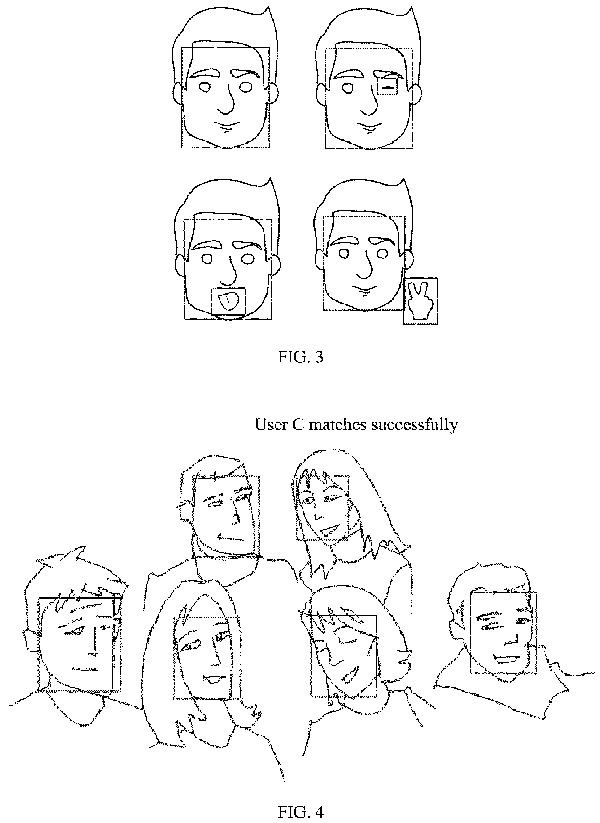

FIG. 3 is a schematic diagram of an action provided by the present application. As illustratively shown in FIG. 3, the action information may include: a face action and/or a limb action. For example, the face action may include: blinking, sticking out tongue, laughing, pouting, etc.; the limb action may include: a hand gesture of V sign, a hand gesture of love, jumping, lifting legs, opening arms, and the like. The action information may include only a face action or a limb action, and may also include a combination of a face action and a limb action.

S203, determining, according to preset action information and the action information of the N users, a target user in the N users, where action information of the target user in the first image is the same as the preset action information.

In the present embodiment, the preset action information may be stored, where the preset action information is preset action information of users authenticated by the terminal. For example, the preset action information includes preset action information of N users. The terminal may determine the target user in the N users according to the preset action information and the action information of the N users.

In an embodiment, the terminal may match the action information of the N users in the first image with the preset action information of the N users. If in the action information of the N users in the first image, the action information of a user is the same as the preset action information, it is determined that the action information is successfully matched. In the present embodiment, matching similarities between the action information of the users in the first image and the preset action information may be obtained, and when a matching similarity is greater than a similarity threshold of the action information, it is determined that the matching is successful. In the present embodiment, the user corresponding to the action information of the user having the greatest matching similarity in the first image may be the target user. The action information of the target user in the first image is the same as the preset action information.

In order to improve a successful matching rate of the action information, in the present embodiment, the preset action information of each user authenticated by the terminal may be set differently. In an embodiment, the terminal may collect an image including face information of a user in the process of authenticating the user by the terminal, and store a face feature and action information of the user in the image correspondingly, and the action information of the user obtained by the terminal in the authentication process is the preset action information of the user. When the terminal determines that there are multiple users whose action information is the same as corresponding preset action information, the terminal may display reminder information to remind the user to change an action and determine the target user.

In the present embodiment, if in the action information of the N users in the first image, there is action information of a single user that is the same as the corresponding preset action information, then the single user is determined to be the target user. As shown in FIG. 1, the first image includes six users, where user A, user B, and user C are users authenticated by the terminal, and the action information of the user A and the user B in the first image is a hand gesture of V sign, the action information of the user C is laughing, and it is assumed that the preset action information of the user A is a hand gesture of love, the action information of the user B is blinking, and the action information of the user C is laughing. FIG. 4 is a first schematic diagram of a recognition result according to the present application. After the terminal matches the action information of the user A, the user B, and the user C in the first image with the preset action information of the user A, the user B, and the user C, it is determined that the action information of the user C is the same as corresponding preset action information thereof, then it is determined that the action information of the user C is successfully matched, that is, the user C is determined to be the target user. As shown in FIG. 4, the words "User C matches successfully" can be identified above the face of the user C. It should be understood that the blocks in FIG. 4 are the faces of the users recognized by the terminal.

In the present embodiment, if in the action information of the N users in the first image, there is action information of M users that is the same as corresponding preset action information, then a second image continues to be collected; and the target user is determined according to the action information of the multiple users in the second image, where M is an integer greater than or equal to 2, and M is less than or equal to N.

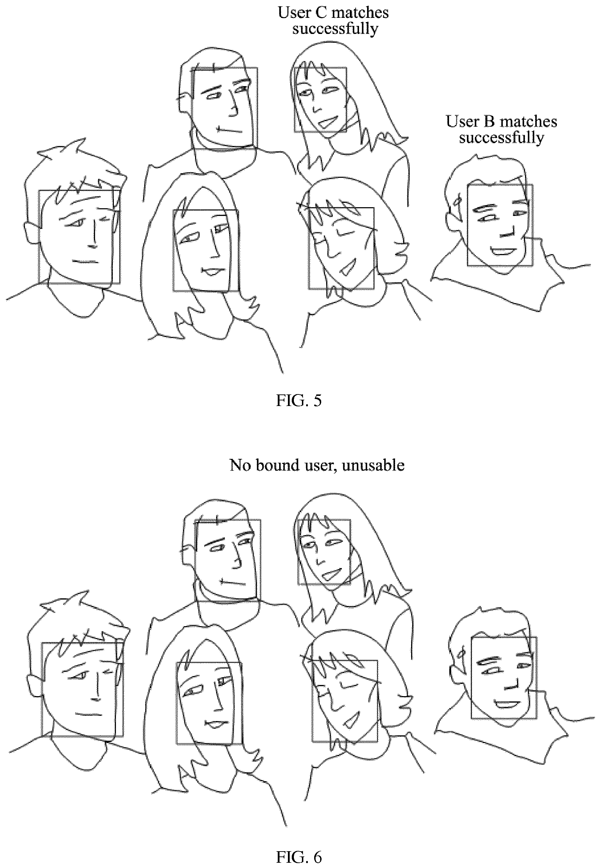

For example, the first image includes six users, where user A, user B, and user C are users authenticated by the terminal, the action information of the user A in the first image is a hand gesture of love, and the action information of user B is blinking, the action information of user C is laughing. FIG. 5 is a second schematic diagram of the recognition result according to the present application. Similarly, after the terminal matches the action information, it is determined that the action information of the user B and the user C are the same as the preset action information of the user B and the user C, respectively, and then it is determined that the action information of the user B and the user C is successfully matched. As shown in FIG. 5, the words "User B matches successfully" and "User C matches successfully" may be identified above the faces of user B and user C.

In this case, since there are M users who are successfully matched according to the action information in the first image, the terminal still cannot respond correctly. The terminal may continue to collect the second image, and then match the action information of the M users in the second image with the preset action information to determine a final target user. It should be understood that, in the present embodiment, when the action information of the M users that are successfully matched is collected in the second image, the action information of the M users may be tracked, and the action information of the M users is obtained in the second image, and the action information of other users is no longer tracked. In an embodiment, the second image may be multiple. For example, the target user still cannot be determined according to the action information of the M users in the first second image collected after the first image, the second image may continue to be collected until the target user can be determined according to the action information of the M users in the second image.

In the present embodiment, if in the action information of the N users in the first image, there is no action information of a user, which is the same as corresponding preset action information, it is determined that there is no target user in the first image. FIG. 6 is a third schematic diagram of the recognition result according to the present application. After the terminal performs action information matching, it is determined that there is no target user in the first image. As shown in FIG. 6, the words "No bound user, unusable" can be displayed on the display interface of the terminal.

In this case, the terminal may continue to collect the second image, and then determine the target user according to the action information of the users in the second image. It should be understood that, in this case, the manner of matching the action information in the first image and the manner of determining the final target user in the second image may refer to the related descriptions of the manners in the above two optional scenarios, and it will not be repeated here.

S204, displaying content bound with the target user according to the action information of the target user in the first image.

In the present embodiment, the preset action information of each user authenticated by the terminal and the content bound with the preset action information may be pre-stored in the terminal. After determining the target user, the terminal may display the content bound with the preset action information of the target user.

It should be understood that, according to different application scenario, the content bound with the preset action information may be different, that is, the content bound with the target user is different. In an embodiment, the terminal is a smart phone, and if the application scenario is that the smart phone collects the first image in an unlocked state, the content bound with the target user and displayed by the smartphone after the target user is determined may be: an application bound with the target user. If the application scenario is that the smart phone collects the first image when it is in the wake-up state and needs to be unlocked, then the content bound with the target user and displayed by the smartphone after the target user is determined is: the terminal enters an operating mode bound with the target user (such as entering an operating mode with a limited permission corresponding to the target user).

In an embodiment, when the terminal is a smart TV, the first image is collected when the smart TV is in the opening state, and the content bound with the target user and displayed by the smartphone after the target user is determined may be: a TV play or a variety show that is bound with the target user, and so on.

In an embodiment, a same user authorized by the terminal can bind to different pieces of content through different pieces of action information. For example, user A is a user authenticated by the terminal, and the user A may correspond to multiple pieces of preset action information, and each piece of preset action information corresponds to a different piece of bound content. In this case, after the terminal determines the users authenticated by the terminal in the first image, the terminal may match the multiple pieces of preset action information corresponding to the user according to the action information of the user, and further in the pieces of content corresponding to the multiple pieces of preset action information, the content bound with the preset action information that is successfully matched is displayed.

For example, preset action information of user A includes: a hand gesture of love, blinking and laughing. Correspondingly, the content bound with the preset action information "the hand gesture of love" may be "TV play 1", and the content bound with the preset action information "blinking" may be "TV play 2", and the content bound with the preset action information "laughing" may be "variety show 3". When it is determined that the action information of the user A in the image is the hand gesture of love, then by matching with the preset action information, "TV drama 1" bound with "the hand gesture of love" can be displayed.

The interactive method based on user action information provided by the present application includes: judging whether a collected first image includes face information of N users authenticated by the terminal, where N is an integer greater than or equal to 2; recognizing action information of the N users in the first image, if the first image includes the face information of the N users authenticated by the terminal; determining, according to preset action information and the action information of the N users, a target user in the N users, where the action information of the target user in the first image is the same as the preset action information; and displaying content bound with the target user according to the action information of the target user in the first image. In the present application, when the terminal recognizes the face information of multiple authenticated users, the terminal further accurately recognizes the target user according to the action information of the users in the image, thereby enabling the terminal to make a correct response.

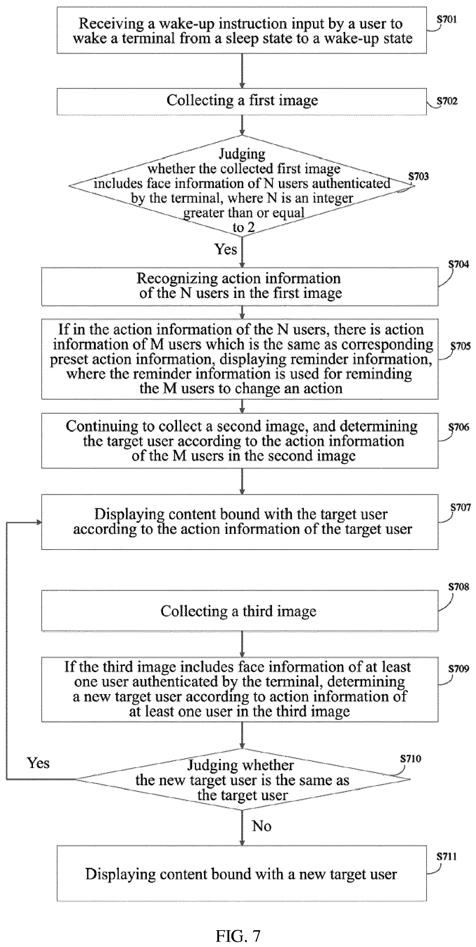

The interactive method based on user action information in the scenario is further illustrated below with reference to FIG. 7. FIG. 7 is a second schematic flowchart of the interactive method based on user action information provided by the present application. As shown in FIG. 7, the interactive method based on user action information provided by this embodiment may include:
S701, receiving a wake-up instruction input by a user to wake a terminal from a sleep state to a wake-up state.

The terminal in the present embodiment may be an audio-visual device, and correspondingly, content bound with a target user is a channel or a program in the audio-visual device.

It should be understood that the user can input a wake-up instruction to the terminal by inputting a voice, for example, the user triggers the terminal to receive the wake-up instruction by saying a fixed wake-up word. Or, the user can input a wake-up instruction to the terminal by manually pressing a wake-up button. In the present embodiment, there is no limitation on how the user wakes up the terminal. The wake-up instruction is used to instruct the terminal to wake from the sleep state to the wake-up state, and to start collecting a first image. It should be understood that the user may be a user bound with the terminal or a user not bound with the terminal.

Correspondingly, after receiving a wake-up instruction, the terminal wakes up from the sleep state to the wake-up state. For example, an audio-visual device may enter a power-on state from a power-off state, and display a main interface of the audio-visual device.

S702, collecting a first image.

After the audio-visual device enters the wake-up state, the first image can be collected, where the first image may be collected for the audio-visual device in real time, or may be collected periodically for the audio-visual device.

S703, judging whether the collected first image includes face information of N users authenticated by the terminal.

S704, recognizing action information of the N users in the first image, if the first image includes the face information of the N users authenticated by the terminal.

S705, if in the action information of the N users, there is action information of M users which is the same as corresponding preset action information, displaying reminder information, where the reminder information is used for reminding the M users to change an action.

In the present embodiment, explanation is made by a scenario where in the action information of the N users, there is action information of M users which is the same as the corresponding preset action information, where M is an integer greater than or equal to 2, and M is less than or equal to N.

If there is action information of M users, which is the same as the corresponding preset action information, in the action information of the N users in the first image, then the terminal needs to further determine a final target user, because when multiple users authenticated by the terminal are matched successfully in the first image, the terminal still cannot respond correctly.

In the foregoing embodiment, when there is the action information of M users that is the same as the corresponding preset action information, in the action information of the N users in the first image, the terminal may continue to collect the second image, thereby determining the target user according to the action information of the M users in the second image. In this case, it is possible that the action information of the M users may not change, and thus the terminal may need to collect multiple second images, and match the action information continuously so as to determine the target user.

In order to improve the efficiency of the terminal in determining the target user, in the embodiment, when there is action information of M users that is the same as the corresponding preset action information, in the action information of the N users in the first image, reminder information may be displayed, where the reminder information is used for reminding the M users to change an action to avoid the problem of collecting multiple second images.

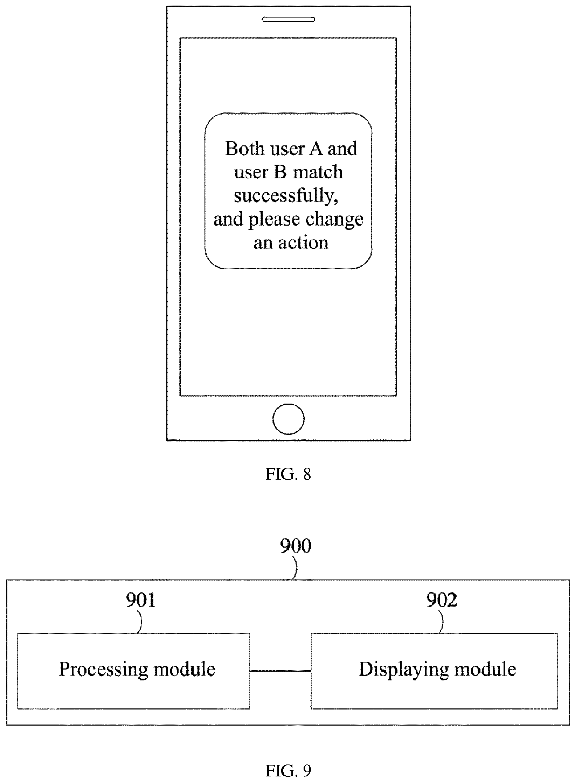

FIG. 8 is a schematic diagram of a terminal interface provided by the present application. As shown in FIG. 8, the terminal may display the reminder information. FIG. 8 illustratively shows that the reminder information is "Both user A and user B match successfully, and please change an action" to remind the user A and the user B to change the action to determine the target user. For example, each of the action information of the user A and the action information of the user B in the first image is the same as the corresponding preset action information, but in fact, what the real user expects to display is the content bound with the user A. Correspondingly, after the user A and the user B see the reminder information, the user A may not change the action, and the user B may change the action information to be action information different from the preset action information thereof. In an embodiment, the user B may also change the action information by leaving the image collecting area, turning the head, etc., so that the terminal determines the user A as the target user. It should be understood that a terminal being a smart phone is taken as an example in FIG. 8 to illustrate the terminal. Accordingly, after the user sees the displayed reminder information, the action will be changed, thereby avoiding the problem that the terminal collects multiple second images to determine the target user.

S706, continuing to collect a second image, and determining the target user according to the action information of the M users in the second image.

In the present embodiment, the terminal may continue to collect the second image, and the manner of determining the target user according to the action information of the M users in the second image may be the same as the manner of determining the target user in the first image in the above embodiment, and will not be repeated here.

S707, displaying content bound with the target user according to the action information of the target user.

The implementations in S703-S704 and S707 in the present embodiment may refer to the related descriptions in S201-S202 and S203 in the above embodiments, and will not be repeated here.

S708, collecting a third image.

In the present embodiment, after displaying the content bound with the target user, the terminal may further collect the third image to meet a requirement that the user wants to continue to switch the displayed content in the process of displaying the content on the terminal.

S709, if the third image includes face information of at least one user authenticated by the terminal, determining a new target user according to action information of the at least one user in the third image.

The method of determining a new target user in the third image in the present embodiment may be the same as the manner of determining the target user in the first image in the above embodiment, and will not be repeated here.

S710, judging whether the new target user is the same as the target user; if yes, returning to execute S707, and if no, executing S711.

In the present embodiment, after determining a new target user in the third image, it may be judged whether the new target user and the target user are the same user. In an embodiment, judging of whether the new target user is the same as the target user may be performed according to a manner of matching the new target user's face information and the target user's face information. If the face information of the new target user and the face information of the target user are successfully matched, then it is determined that the new target user is the same as the target user, and if the face information of the new target user and the face information of the target user fail to match, then it is determined that the new target user is different from the target user.

S711, displaying content bound with a new target user.

After determining the new target user, the terminal may display the content bound with the new target user according to the action information of the new target user in the third image. The content bound with the new target user is: content pre-stored in the terminal and corresponding to the action information of the new target user in the third image.

In the present embodiment, when there is the action information of M users that is the same as the corresponding present action information, in the action information of the N users in the first image, the reminder information may be displayed, and the reminder information is used for reminding the M users to change the action. The second image continues to be collected, the target user is determined according to the action information of the M users in the second image, and further the content bound with the target user is displayed. The interactive method based on user motion information provided in this embodiment can quickly and effectively determine the target object, which improves the interaction efficiency. In addition, in the present embodiment, after displaying the content bound with the target user, whether the target user changes is determined according to the third image that continues to be collected, thereby realizing that the displayed content is switched when the target user changes, which improves the flexibility of interaction process .

FIG. 9 is a first schematic structural diagram of an interactive device based on user action information provided by the present application. The interactive device based on user action information may be a terminal or a chip set in the terminal. As shown in FIG. 9, the interactive device 900 based on user action information includes: a processing module 901 and a displaying module 902.

The processing module 901 is configured to judge whether a collected first image includes face information of N users authenticated by the terminal, where N is an integer greater than or equal to 2; recognizing action information of the N users in the first image, if the first image includes the face information of the N users authenticated by the terminal; determining, according to preset action information and the action information of the N users, a target user in the N users, where action information of the target user in the first image is the same as the preset action information.

The displaying module 902 is configured to display content bound with the target user according to the action information of the target user in the first image.

The principle and technical effects of implementing the interactive device based on user action information provided in the present embodiment are similar to those of the above interactive method based on user action information, and will be not repeated here.

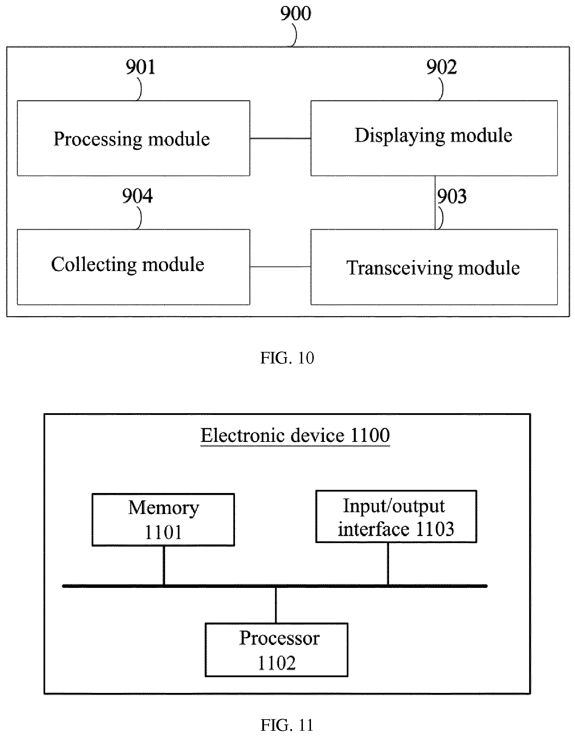

In an embodiment, FIG. 10 is a second schematic structural diagram of an interactive apparatus based on user action information according to the present application. As shown in FIG. 10, the interactive apparatus 900 based on user action information further includes: a transceiving module 903 and a collecting module 904.

In an embodiment, the collecting module 904 is configured to: if in the action information of the N users, there is action information of M users which is the same as corresponding preset action information, continue to collect a second image, where M is an integer greater than or equal to 2, and M is less than or equal to N.

In an embodiment, the processing module 901 is specifically configured to determine a target user according to action information of multiple users in the second image.

In an embodiment, the displaying module 902 is further configured to display reminder information, where the reminder information is used for reminding multiple users to change an action.

In an embodiment, the processing module 901 is specifically configured to: if in the action information of N users, there is action information of a single user, which is the same as the corresponding preset action information, determine the single user to be the target user.

In an embodiment, the collecting module 904 is further configured to collect a third image.

Correspondingly, the processing module 901 is further configured to: if the third image includes face information of at least one user authenticated by the terminal, determine a new target user according to the action information of the at least one user in the third image and judge whether the new target user is the same as the target user.

The displaying module 902 is further configured to display content bound with the new target user when the new target user is different from the target user.

The transceiving module 903 is configured to receive a wake-up instruction to wake the terminal from a sleep state to a wake-up state.

Correspondingly, the collecting module 904 is configured to collect the first image after the terminal enters the wake-up state.

In an embodiment, the action information includes: a face action and/or a limb action.

In an embodiment, the electronic device is an audio-visual device, and the content bound with the target user is a channel or program in the audio-visual device.

FIG. 11 is a schematic structural diagram of an electronic device provided by the present application. The electronic device can be, for example, a terminal device, such as a smart phone, a tablet computer, a computer, an audio-visual device, or the like. As shown in FIG. 11, the electronic device 1100 includes: a memory 1101 and at least one processor 1102.

The memory 1101 is configured to store program instructions.

The processor 1102 is configured to implement the interactive method based on user action information in the present embodiments when the program instructions are executed. The specific implementation principle may refer to the above embodiments, and will not be repeated here.

The electronic device 1100 can also include an input/output interface 1103.

The input/output interface 1103 may include independent output and input interfaces, and may also be an integrated interface of integrating input and output, where the output interface is configured to output data, and the input interface is configured to obtain input data.

The present application further provides a readable storage medium, in which executable instructions are stored, and when at least one processor of the electronic device executes the executable instructions, the interactive method based on user action information in above embodiments is implemented.

The application also provides a program product including executable instructions which are stored in a readable storage medium. At least one processor of an electronic device can read the executable instruction from a readable storage medium, and the at least one processor executes the executable instructions to cause the electronic device to implement the interactive method based on user action information provided by the above various implementations.

In the several embodiments provided by the present application, it should be understood that the disclosed apparatus and method may be implemented in other manners. For example, the apparatus embodiments described above are merely illustrative, for example, the division of the modules is only a logical function division, and in practice implementation, there may be another division manner, for example, multiple modules or components may be combined or may be integrated into another system, or some features may be ignored or not executed. In addition, the mutual coupling or direct coupling or communication connection displayed or discussed may be indirect coupling or communication connection through some interfaces, devices or modules, and may be electrical, mechanical or other forms.

The modules described as separate components may or may not be physically separated, the components displayed as modules may or may not be physical modules, that is, may be located in one place, or may be distributed to multiple network modules. Some or all of the modules may be selected according to actual needs to implement the purpose of the solutions of the embodiments.

In addition, each functional module in each embodiment of the present application may be integrated into one processing module, or each module may exist physically separately, or two or more modules may be integrated into one module. The above integrated modules can be implemented in the form of hardware or in the form of hardware plus software function modules.

The above integrated modules implemented in the form of software function modules can be stored in a computer readable storage medium. The software function modules are stored in a storage medium, and include some instructions which enable a computer device (which may be a personal computer, a server, or a network device, etc.) or a processor to execute some of steps of the method in the embodiments of the present application. The foregoing storage medium includes a variety of media that can store program code, such as a U disk, a mobile hard disk, a read-only memory (ROM), a random access memory (RAM), a magnetic disk or an optical disk.

In the embodiment of the above terminal device, it should be understood that the processor may be a central processing unit (CPU), or may be other general-purpose processor, digital signal processor (DSP), application specific integrated circuit (ASIC) and so on. The general-purpose processor may be a microprocessor or the processor may also be any conventional processors or the like. The steps of the method disclosed in combination with the present application may be directly embodied as being executed by a hardware processor, or by a combination of hardware and software modules in a processor.

Finally, it should be noted that the above embodiments are only for illustrating the technical solutions of the present application, and are not intended to limit; although the present application has been described in detail with reference to the foregoing embodiments, those skilled in the art should understand that the technical solutions described in the foregoing embodiments may still be modified, or some or all of the technical features may be equivalently substituted; and the modifications or substitutions do not make the essence of the corresponding solutions depart from the scope of the technical solutions of the embodiments of the present application.

## Claims

1. An interactive method based on user action information, comprising:
judging (S201) whether a collected first image includes face information of N users authenticated by a terminal, wherein N is an integer greater than or equal to 2;
recognizing (S202) action information of the N users in the first image, if the first image includes the face information of the N users authenticated by the terminal;
determining (S203), according to preset action information and the action information of the N users, a target user in the N users, wherein action information of the target user in the first image is the same as the preset action information; and
displaying (S204) content bound with the target user according to the action information of the target user in the first image.

2. The method according to claim 1, wherein the determining a target user in the N users comprises:
if in the action information of the N users, there is action information of M users which is the same as corresponding preset action information, continuing (S706) to collect a second image, wherein M is an integer greater than or equal to 2, and the M is less than or equal to the N; and
determining the target user according to the action information of the M users in the second image.

3. The method according to claim 2, wherein before the collecting a second image, the method further comprises:
displaying (S705) reminder information, wherein the reminder information is used for reminding the M users to change an action.

4. The method according to claim 1, wherein the determining a target user in the N users comprises:
if in the action information of the N user, there is action information of a single user which is the same as corresponding preset action information, determining the single user to be the target user.

5. The method according to claim 1, wherein after displaying the content bound with the target user, the method further comprises:
collecting (S708) a third image;
if the third image includes face information of at least one user authenticated by the terminal, determining (S709) a new target user according to the action information of the at least one user in the third image;
judging (S710) whether the new target user is the same as the target user; and
if not, displaying (S711) content bound with the new target user.

6. The method according to claim 1, wherein before judging whether the collected first image includes the face information of the N users authenticated by the terminal, the method further comprises:
receiving (S701) a wake-up instruction input by a user to wake the terminal from a sleep state to a wake-up state; and
collecting (S702) the first image.

7. The method according to claim 1, wherein the action information comprises: a face action and/or a limb action.

8. The method according to claim 1, wherein the terminal is an audio-visual device, and the content bound with the target user is a channel or a program in the audio-visual device.

9. An interactive apparatus (900) based on user action information, comprising:
a processing module (901), configured to judge whether a collected first image includes face information of N users authenticated by a terminal, wherein N is an integer greater than or equal to 2; recognize action information of the N users in the first image, if the first image includes the face information of the N users authenticated by the terminal; and determine a target users in the N users according to preset action information and the action information of the N users, wherein action information of the target user in the first image is the same as the preset action information;
a displaying module (902), configured to display content bound with the target user according to the action information of the target user in the first image.

10. The apparatus (900) according to claim 9, wherein the apparatus (900) further comprises: a collecting module (904);
the collecting module (904) is configured to: if in the action information of the N users, there is interaction information of M users which is the same as corresponding preset action information, continue to collect a second image, wherein M is an integer greater than or equal to 2, and the M is less than or equal to the N;
the processing module (901) is specifically configured to determine the target user according to the action information of the M users in the second image.

11. The apparatus (900) according to claim 10, wherein the displaying module (902) is further configured to display reminder information, wherein the reminder information is configured to remind the M users to change an action.

12. The apparatus (900) according to claim 9, wherein the processing module (901) is specifically configured to: if in the action information of the N user, there is action information of a single user which is the same as corresponding preset action information, determine the single user to be the target user.

13. The apparatus (900) according to claim 9, wherein the collecting module (904) is further configured to collect a third image;
the processing module (901) is further configured to: if the third image includes face information of at least one user authenticated by the terminal, determine a new target according to action information of the at least one user in the third image, and judge whether the new target user is the same as the target user;
the displaying module (902) is configured to display content bound with the new target user when the new target user is different from the target user.

14. The apparatus (900) according to claim 9, wherein the apparatus (900) further comprises a transceiving module (903) and a collecting module (904);
the transceiving module (903) is configured to receive a wake-up instruction to wake the terminal from a sleep state to a wake-up state; and
the collecting module (904) is configured to collect the first image.

15. The apparatus (900) according to claim 9, wherein the action information comprises: a face action and/or a limb action.
